# EUROPÄISCHE PATENTSCHRIFT

(11) **EP 0 365 835 B1**
(45) Veröffentlichungstag und Bekanntmachung des Hinweises auf die Patenterteilung: **24.04.1996**
(21) Anmeldenummer: 89117601.8
(22) Anmeldetag: 23.09.1989
(51) Int. Cl.: B32B 27/08, B32B 27/20

(54) **Mehrschichtiger Kunststoffkörper**
Multilayered synthetic article
Article multicouche en matière plastique

(30) Priorität: 25.10.1988 CH 3964/88
(43) Veröffentlichungstag der Anmeldung: 02.05.1990
(73) Patentinhaber: Symalit AG, CH-5600 Lenzburg (CH)
(72) Erfinder: Wickli, Werner, CH-5702 Niederlenz (CH); Werthmüller, Beat, CH-5742 Kölliken (CH)
(74) Vertreter: Blum, Rudolf Emil Ernst

(56) Entgegenhaltungen:
- EP-A- 0 078 174
- DE-A- 1 471 296
- GB-A- 1 599 020
- GB-A- 2 074 939

## Beschreibung

Die Erfindung betrifft ein mehrschichtiges Kunststoffrohr mit einer schall- und/oder wärmedämmenden Schicht, wobei die Schichten koextrudiert sind. Solche Kunststoffrohre werden insbesondere im Wohnungs- und Industriebau verwendet. Allgemein bekannt sind die Vorteile solcher Kunststoffrohre, beispielsweise leichtes Gewicht, einfache Verlegetechnik, Beständigkeit gegen übliche häusliche und industrielle Abwässer, etc.

Bezüglich Schalldämmung im Wohnungs- und Industriebau sind in den letzten Jahren die Ansprüche wesentlich gestiegen.

Um eine schalltechnische und auch thermische Isolierung zu erreichen, werden die bekannten Leitungsanlagen üblicherweise mit zusätzlichen Massnahmen, beziehungsweise Hilfsbaustoffen, versehen.

Diese sind beispielsweise die sogenannten Isolierhalbschalen, welche aus Schaumstoffen oder mineralischen Fasern, wie z.B. Glas- oder Steinwolle, bestehen, welche Isolierhalbschalen nachträglich um die eingebauten Rohre gelegt werden oder sind aus verschiedenen Materialien zusammengesetzte Isoliermatten, welche insbesondere zur akustischen Isolierung nachträglich um die Rohre gewickelt werden müssen. Dieses bedeutet offensichtlich einen zusätzlichen Aufwand beim Installieren von Rohren, welcher die insgesamten Baukosten verteuert.

In der DE-PS 2 714 576 ist ein Kunststoffrohrteil für Abflussrohranlagen offenbart, das auf der Rohraussenseite eine Schalldämmschicht aus einem offenporigen, weichen Schaumstoff mit einem anorganischen Füllstoff aufweist. Diese Schicht wird aber erst nachträglich auf das bereits vorfabrizierte Rohr aufgeschäumt, so dass auch hier ein zusätzlicher Arbeitsschritt und Aufwand vorliegt. Um die angeführte Schalldämmwirkung zu erreichen, ist eine Isolationsdicke von 10 mm notwendig.

Die EP-A-0 213 674 zeigt ein Rohr aus Kunststoff, das zum Einsetzen in eine Abwasserleitung bestimmt ist, um die Leitung zu reparieren oder zu erneuern. Das Rohr enthält ein äusseres, starres Wellrohr aus Kunststoff, dessen innere Seiten durch Dichtflächen überdeckt sind, welche Dichtflächen eine weitere Schicht bilden und aus einem Material bestehen, das elastische Eigenschaften aufweist und insbesondere ein abriebfestes Elastomer enthält. Die Kombination der zwei Schichten des Rohres gemäss der EP-A-0 213 674 bewirkt jedoch kaum, falls überhaupt, eine Schalldämmung.

Hier will die Erfindung Abhilfe schaffen. Die Erfindung, wie in den Ansprüchen gekennzeichnet, löst die Aufgabe, ein mehrschichtiges Kunststoffrohr mit einer schall- und/oder wärmedämmenden Schicht zu schaffen, das mindestens zwei coextrudierte Schichten aufweist, wovon eine als schalldämmende Schicht ausgebildet ist und gegenüber mindestens einer weiteren Schicht ein Material höherer Dichte mit grösserer Elastizität aufweist, welches Material ein Grundmaterial mit der Eigenschaft enthält, mindestens 85 Gew.-% Füllstoffe aufnehmen zu können.

Die durch die Erfindung erreichten Vorteile sind im wesentlichen darin zu sehen, dass das Kunststoffrohr in einem Arbeitsgang herstellbar ist und nicht auf einer jeweiligen Baustelle zusätzliche Arbeitsgänge zur Erzielung der erwünschten Eigenschaft der Schalldämmung notwendig sind.

Im folgenden wird die Erfindung anhand mehrerer Ausführungswege darstellender Zeichnungen näher erläutert.

Es zeigt:
Fig. 1 einen Schnitt durch die Wand eines zweischichtigen Kunststoffrohres, und
Fig. 2 einen Schnitt durch die Wand eines dreischichtigen Kunststoffrohres.

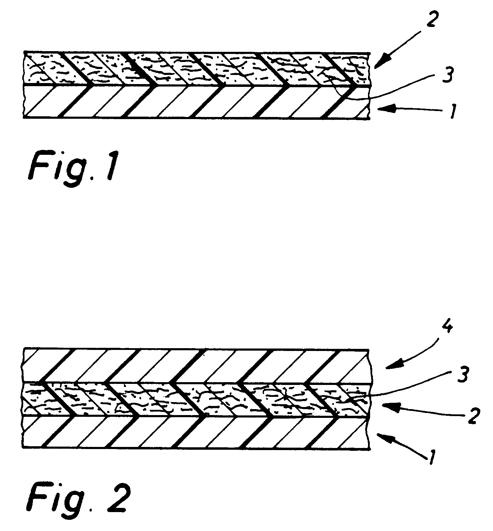

Das akustisch und/oder thermisch isolierende Kunststoffrohr enthält also mindestens zwei coextrudierte Schichten aus Materialien unterschiedlicher Dichte und unterschiedlicher Elastizität, wobei das Material mit der jeweils höheren Dichte ein thermoplastisch verarbeitbares Material ist. Das Material mit der jeweils höheren Dichte und grösseren Elastizität, bzw. die damit gebildete Schicht, ist in den Figuren mit der Bezugsziffer 2 angedeutet. Die andere Schicht, in der Fig. 1 mit der Bezugsziffer 1 bezeichnet, kann beispielsweise aus Polyäthylen, Polypropylen oder einem anderen thermoplastischen Kunststoff gebildet sein. Entsprechend können die Materialien, die in der Fig. 2 mit den Bezugsziffern 1 und 4 bezeichnet sind, ebenfalls Polyäthylen und/oder Polypropylen oder dgl. sein. Unabhängig davon, ob zwei oder drei Schichten vorliegen, sind diese durch Coextrusion zum Rohr geformt worden. Damit bildet die Schicht mit den vorgenannten erforderlichen Eigenschaften in bezug auf die thermische und/oder akustische Dämmung ein einstückiger Bestandteil des Rohres. Es liegt also ein einstückiger Kunststoffkörper mit mindestens zwei Schichten unterschiedlicher Dichte und unterschiedlicher Elastizität vor, welche sich insbesondere auf die schalldämmenden Eigenschaften auswirken.

Bei der Ausführung, bei welcher die Schicht 1, bzw. die Aussenschichten 1 und 4 aus HDPE besteht bzw. bestehen, ist nun die andere Schicht 2 (Fig. 1) bzw. die Mittelschicht 2 (Fig. 2) aus einem Material mit einem Grundmaterial gebildet, welches dazu neigt, sehr hohe Anteile an Füllstoffen 3 aufzunehmen. Dieses Grundmaterial ist ein thermoplastisches Elastomer, bzw. ein thermoplastisch verarbeitbarer synthetischer Kautschuk, der mit einem mineralischen Füllstoff, z.B. Bariumsulfat, auch als "Baryt" bekannt, angereichert ist. Damit ergibt sich der erwünschte hohe Dichteunterschied und die grössere Elastizität zwischen den jeweiligen Schichten, womit das entsprechend hergestellte Rohr beträchtliche Schalldämpfungseigenschaften aufweist.

Um diese beträchtliche Schalldämmung zu erreichen, genügt eine Schichtdichte 2 von lediglich 3-6 mm. Somit sind Erzeugnisse mit geringerem Materialeinsatz und mit geringeren Abmessungen herstellbar, die dennoch den Anforderungen an die Luftschall- und Körperschalldämmwirkungen gerecht werden.

An Hausentwässerungsrohren wird oft die Forderung gestellt, dass sie flamm- und brandhemmende Eigenschaften aufweisen oder zumindest nicht brandverschleppend wirken. Eine solche Ausführungsform eines Rohrstückes mit einer zweischichtigen Wand gemäss der Schnittzeichnung der Fig. 1 weist eine Innenschicht 1 aus dem vorerwähnten Stoff sowie die akustisch und/oder thermisch isolierende Schicht 2 als Aussenschicht des Rohres auf, wobei in dieser Aussenschicht 2 durch den überproportional hohen Gehalt von mineralischem Füllstoff der Anteil der brennbaren Komponenten stark verdünnt und bereits dadurch die Entflammbarkeit stark herabgesetzt wird. Zusätzlich wird durch Zugabe von bekannten flamm- oder brandhemmenden Komponenten, wie Aluminiumhydroxid, Magnesiumhydroxid oder Zinkborat etc. eine entzündungs- oder flamm- und brandhemmende Wirkung erzeugt.

Wenn das Material der Schicht 2, sei dies nun die Aussenschicht gemäss der Fig. 1 oder die Zwischenschicht gemäss der Fig. 2 insbesondere zur thermischen Isolation beitragen muss (Kälte- oder Wärmeisolation), wird vor dem Coextrudieren dem betreffenden Material weiter ein Treibmittel, z.B. Azodicarbonamid, beigemischt, welches eine geschäumte Schicht bewirkt. Aufgrund der in dieser in grosser Zahl vorhandenen Poren, es können dies hohlkugelförmige, geschlossene oder auch teilweise offene kleine Hohlräume sein, in welchen Poren Luft oder noch vorhandene Treibgase eingeschlossen sind, wird die Isolationswirkung erheblich verbessert.

Es wurde ein Kunststoffrohr gemäss einer Ausführung nach der Fig. 2 hergestellt, wobei die Mittelschicht die angeführten Eigenschaften aufwies. Damit wurden Schallmessungen durchgeführt, die zeigten, dass mit diesem Rohr mit lediglich 3-5 mm dicker Isolationsschicht eine Schalldämmung erreicht wird, die derjenigen eines normalen HDPE-Rohres umwickelt mit einer im Stand der Technik bekannten mehrschichtigen Matte, die aber verhältnismässig dick und einen hohen Aufwand bei Montage und Reparatur benötigt, entspricht.

In einem weiteren praktischen Ausführungsbeispiel wurde mit für die Coextrusion notwendigen Formwerkzeugen und mit drei Extrudern, nachfolgend A, B und C genannt, ein Mehrschichtrohr mit folgendem Aufbau hergestellt: Der Extruder A plastifizierte und förderte ein für Druck- oder Hausentwässerungsrohre geeignetes Rohmaterial aus HDPE (high density polyethylen) in den Mehrschicht-Extrusionskopf. Mit dem Extruder B wurde die in diesem Falle schalldämmende Mittelschicht gebildet. Diese Mittelschicht enthielt 160 Gewichts-Anteile eines thermoplastischen Elastomers und 1100 Gewichts-Anteile eines Füllmaterials in Form vom BaSO₄.

Der Extruder C plastifizierte und förderte wiederum ein Polyäthylen, das durch seine Schmelzviskosität dazu geeignet war, auf der schalldämmenden Mittelschicht im Mehrschichtwerkzeug eine geschlossene Aussenschicht zu bilden.

Aus der Austrittsdüse des Mehrschichtwerkzeuges trat nun ein rohrförmiges Produkt aus, welches durch bekannte, geeignete Abkühl- und Kalibriervorrichtungen zu einem Rohr ausgebildet wurde, das den anhand der Fig. 2 beschriebenen Mehrschichtaufbau und insbesondere die Mittelschicht mit einem im Rohr integrierten Schalldämmeffekt aufwies.

Die erfindungsgemäss ausgebildeten Kunststoffrohre können durch Stumpfschweissung direkt miteinander verbunden werden, wodurch eine durchgehend wirksame Schalldämmschicht erhalten wird.

Eine andere Verbindungsmethode kann darin bestehen, dass die äussere Schicht 4 (sofern vorhanden) und die schalldämmende Schicht 2 mit einem geeigneten Hilfswerkzeug abgeschält werden und die nun freiliegenden Rohrenden (Schicht 1) mit in der Praxis bekannten Schweissmuffen miteinander verbunden werden. Im Bereich der vor dem Verbinden abgeschälten Rohrenden übernimmt nun die Schweissmuffe die Funktion der Schalldämmung.

## Patentansprüche

1. Mehrschichtiges Kunststoffrohr aus mindestens zwei coextrudierten Schichten, von welchen eine erste Schicht (2) gegenüber einer zweiten Schicht (1,4) ein Material höherer Dichte und grösserer Elastizität aufweist, welche erste Schicht (2) eine schalldämmende Schicht ist und ein Grundmaterial mit einem Mindestgehalt von 85 Gew.-% Füllstoffen enthält.

2. Kunststoffrohr nach Anspruch 1, wobei das Material mit der höheren Dichte und der grösseren Elastizität ein Grundmaterial enthält, das ein elastisches und thermoplastisch verarbeitbares, synthetisches Elastomer ist.

3. Kunststoffrohr nach Anspruch 1, wobei das Material mit der höheren Dichte mineralischen Schwer-Füllstoff in Form von Bariumsulfat oder Abmischungen davon mit anderen mineralischen Füllstoffen enthält.

4. Kunststoffrohr nach Anspruch 1, wobei das Material höherer Dichte die Brennbarkeit und/oder Entflammbarkeit verhindernde oder herabsetzende Stoffe enthält.

5. Kunststoffrohr nach Anspruch 1, wobei eine nicht die höhere Dichte und grössere Elastizität aufweisende Schicht die Brennbarkeit und/oder Entflammbarkeit verhindernde oder herabsetzende Stoffe enthält.

6. Kunststoffrohr nach Anspruch 1, wobei mindestens eine Schicht ein geschäumtes Material enthält, derart, dass eine thermisch isolierende Schicht vorliegt.

7. Verfahren zur Herstellung eines Kunststoffrohres nach Anspruch 1, dadurch gekennzeichnet, dass das Material mit der jeweils höheren Dichte und grösseren Elastizität ein thermoplastisch verarbeitbares, synthetisches Elastomer ist, dem mineralischer Füllstoff zur Erzielung der höheren Dichte zugegeben wird und mit mindestens einem weiteren thermoplastischen Kunststoff coextrudiert wird, derart, dass ein Kunststoffrohr mit einer integrierten Schalldämmschicht in nur einem Arbeitsgang produziert wird.

## Claims

1. Multilayer plastic tube of at least two coextruded layers, of which a first layer (2) features relative to a second layer (1, 4) a material of a higher density and larger elasticity, which first layer (2) is a sound attenuating layer and contains a base material with a minimum content of 85 percent by weight filler materials.

2. Plastic tube according to claim 1, whereby the material with the higher density and larger elasticity contains a base material which is an elastically and thermoplastically treatable, synthetic elastomer.

3. Plastic tube according to claim 1, whereby the material of the higher density contains a mineral heavy filler material in form of barium sulfate or mixtures of barium sulfate and other mineral filler materials.

4. Plastic tube according to claim 1, whereby the material of a higher density contains materials preventing or decreasing the burnability and/or inflammability.

5. Plastic tube according to claim 1, whereby a layer which does not feature the higher density and larger elasticity contains materials preventing or decreasing the burnability and/or inflammability.

6. Plastic tube according to claim 1, whereby at least one layer contains a foamed material, such that a thermically insulating layer is present.

7. Method of producing a plastic tube according to claim 1, characterized in that the respective material with the higher density and larger elasticity is a thermoplastically treatable, synthetic elastomer to which a mineral filling material for achieving the higher density is added and which is coextruded with at least one further thermoplastic material, such that a plastic material tube with an integral sound attenuating layer is produced in one single working operation.

## Revendications

1. Tuyau multicouche en plastique comportant au moins deux couches co-extrudées dont une première couche (2) comprend un matériau de plus grande densité et de plus forte élasticité qu'une seconde couche (1, 4), ladite première couche (2) étant une couche d'insonorisation comportant un matériau de base contenant au moins 85% en poids de matériaux de remplissage.

2. Tuyau en plastique selon la revendication 1, dans lequel le matériau de plus forte densité et élasticité contient un matériau de base formé par un élastomère synthétique élastique pouvant être travaillé par thermoplasticité.

3. Tuyau en plastique selon la revendication 1, dans lequel le matériau de plus forte densité contient un matériau minéral lourd de remplissage sous forme de sulfate de baryum ou d'un mélange de ce produit avec d'autres matériaux minéraux de remplissage.

4. Tuyau en plastique selon la revendication 1, dans lequel le matériau de plus forte densité contient des produits éliminant ou réduisant sa combustibilité ou son inflammabilité.

5. Tuyau en plastique selon la revendication 1, dans lequel la couche ne présentant pas une densité et une élasticité plus forte contient des produits éliminant ou réduisant sa combustibilité ou son inflammabilité.

6. Tuyau en plastique selon la revendication 1, dans lequel au moins une couche contient un matériau expansé, de manière à former une couche isothermique.

7. Méthode pour la fabrication d'un tuyau en plastique selon la revendication 1, caractérisé en ce que le matériau de plus grande densité et de plus forte élasticité est un élastomère synthétique élastique pouvant être travaillé par thermoplasticité auquel on ajoute un matériau minéral de remplissage pour obtenir une plus grande densité et qu'on le co-extrude avec un autre matériau thermoplastique synthétique de manière à former en une seule opération un tuyau en plastique synthétique comportant une couche d'insonorisation.
